Europäisches Patentamt

European Patent Office

Office européen des brevets

(11) Veröffentlichungsnummer: **0 156 043**

**A2**

(12) # EUROPÄISCHE PATENTANMELDUNG

(21) Anmeldenummer: 84201879.8

(22) Anmeldetag: 17.12.84

(51) Int. Cl.⁴: **C 08 K 3/38**
C 08 K 5/55, C 08 L 61/06
C 08 L 63/00, B 22 C 1/22

(30) Priorität: 30.03.84 DE 3411827

(43) Veröffentlichungstag der Anmeldung:
02.10.85 Patentblatt 85/40

(84) Benannte Vertragsstaaten:
CH DE FR GB IT LI

(71) Anmelder: Rütgerswerke Aktiengesellschaft
Mainzer Landstrasse 217
D-6000 Frankfurt a.Main 1(DE)

(72) Erfinder: Gardziella, Arno, Dr.
Rüdinghauser Berg 4
D-5810 Witten(DE)

(72) Erfinder: Adolphs, Peter, Dr.
Seilerblick 19
D-5860 Iserlohn(DE)

(72) Erfinder: Kwasniok, Alois, Dl.
Vom-Stein-Strasse 32
D-5860 Iserlohn-7(DE)

(54) Härtbare Formmassen und ihre Verwendung.

(57) Die Erfindung betrifft härtbare Formmassen aus organischen Bindemitteln, Füll- und Zusatzstoffen, bei denen das Bindemittel nach der Formgebung und Härtung pyrolytisch zersetzt wird. Die Entwicklung von Schadstoffen wie aromatischen Kohlenwasserstoffen wird durch Zugabe von Bor-Sauerstoffverbindungen verhindert.

EP 0 156 043 A2

Croydon Printing Company Ltd.

0156043

RÜTGERSWERKE Aktiengesellschaft, 6000 Frankfurt/M. 11

EP-906-R

P a t e n t a n m e l d u n g

Härtbare Formmassen und ihre Verwendung

Die Erfindung betrifft härtbare Formmassen aus organischen Bindemitteln und üblichen Füll- und Zusatzstoffen, bei denen das Bindemittel nach der Formgebung und der Härtung pyrolytisch zersetzt wird. Derartige Formmassen haben eine große Bedeutung im Gießereiwesen zum Herstellen von Formen und Kernen sowie zur Herstellung von feuerfesten Erzeugnissen und Kohlenstoff-Werkstoffen.

Bei diesen Anwendungen dienen die organischen Bindemittel in vorteilhafter Weise dazu, den jeweiligen geformten Erzeugnissen die notwendige Grünfestigkeit zu geben.

Beim Brennen oder während des Gießvorganges werden die organischen Bindemittel pyrolytisch zersetzt. Bei diesem an sich erwünschten Vorgang bilden sich beträchtliche Mengen an gasförmigen Schadstoffen (vgl. Gießereitechnik 26 (1980) 213 - 216 und VDG Merkblätter R 303, R 304, R 305 und R 306). Zu den gefährlichsten dieser Schadstoffe gehören aromatische Kohlenwasserstoffe wie z.B. Diphenyl, Trimethylbenzol, Xylol, Toluol und vor allem Benzol.

Es ist Aufgabe der Erfindung, härtbare Formmassen bereitzustellen, die in einfacher, wirtschaftlicher Weise herzustellen sind, deren Eigenschaften denen der bislang üblichen Formmassen nicht nachstehen und bei deren pyrolytischer Zersetzung keine oder nur geringe Mengen an aromatischen Kohlenwasserstoffen entstehen.

Die Lösung der Aufgabe erfolgt durch Formmassen gemäß der Ansprüche 1 - 9. Diese Formmassen sind daher bestens geeignet zur Herstellung von feuerfesten Erzeugnissen, sowie von Formen und Kernen in der Gießereiindustrie.

Die Verwendung von Borverbindungen in härtbaren polymeren Bindemitteln, insbesondere solchen auf der Basis von Phenol-Formaldehyd-Kondensationsprodukten ist bekannt. So beschreibt die DE-PS 537 367 ein Verfahren zur Erhöhung des Schmelzpunktes von Novolaken durch Zusatz geringer Mengen von Borsäure oder deren Anhydrid.

US-PS 2 606 888 beschreibt Formmassen auf Basis Novolak und Hexamethylentetramin, die 0,1 bis 15 Gew.-% Borsäure enthalten, wobei die Borsäure die Plastizität der Massen und die Härtungsgeschwindigkeit erhöht.

Nach GB-PS 1 055 637 wird als Borverbindung ein Borsäuresalz des Hexamehylentetramins mit Phenolharz kombiniert.

Gemäß US-PS 2 889 241 wird Borsäure mit einem Phenol-resol kombiniert, um die Mischung zu verdicken. Die Masse wird als Kleber für Fasern und Sperrholz verwendet.

Aus US-PS 2 864 782 ist bekannt, härtbare Harze wie Phenol-, Melamin- oder Harnstoffharze mit Borsäure zu härten.

Epoxidharze werden nach DE-PS 1 089 167 mit Bortrioxid, nach DE-PS 1 545 056 mit Borsäureestern gehärtet.

Aus US-PS 3 332 911 ist bekannt, Phenole mit Aldehyden in Gegenwart von Borsäure oder Salzen der Borsäure zu kondensieren. Die resultierenden borhaltigen Phenolharze zeichnen sich durch ein sehr gutes Härtungsverhalten aus.

In all den genannten Schriften wird als weiterer Vorteil der mit Borverbindungen gehärteten oder modifizierten Harze hervorgehoben, daß die entsprechenden gehärteten Massen eine bessere thermische Beständigkeit besitzen.

Für die Herstellung von Formmassen für die Gießerei, für feuerfeste Erzeugnisse oder Kohlenstoff-Werkstoffe aber sind hohe thermische Beständigkeiten der Bindemittel nicht gefordert, ja sogar unerwünscht. Die Bindemittel sollen pyrolytisch zerstört werden unter Bildung eines Kohlenstoffgerüstes.

Trotz dieses Vorbehalts hat es sich gezeigt, daß härtbare borhaltige Formmassen sich in den genannten Anwendungsgebieten problemlos einsetzen lassen, ohne daß eine nachteilige Änderung des für diese Anwendungen geforderten Eigenschaftsprofils auftritt.

Zusätzlich wurde überraschenderweise gefunden, daß bei der pyrolytischen Zersetzung dieser erfindungsgemäßen, borhaltigen Formmassen oder der daraus hergestellten Formkörper keine oder nur geringe Mengen an niedermolekularen aromatischen Kohlenwasserstoffen freigesetzt werden. Somit reduziert der Einsatz von Borverbindungen in härtbaren Formmassen aus organischen Bindemitteln und üblichen Füll- und Zusatzstoffen, bei denen das Bindemittel nach der Formgebung und dem Härtungsvorgang pyrolytisch zersetzt wird, deren Umweltbelastung bei der Pyrolyse der Bindemittel.

Erfindungsgemäße, härtbare Formmassen sind ungeformte Mischungen aus 5 - 50 Gew.-% eines organischen Bindemittels mit 50 - 95 Gew.-% Füll- und Zusatzstoffen, die unter Einfluß mechanischer Kräfte zu vorgeformten Massen

0156043

für feuerfeste Erzeugnisse, Kohlenstoff-Werkstoffe oder für Kerne und Formen für das Gießereiwesen vearbeitet werden können. Diese vorgeformten Massen werden durch Einwirkung von Druck und/oder Hitze zu Formteilen gehärtet. Durch weitere Temperaturerhöhung wird das organische Bindemittel pyrolytisch so zerstört, daß ein stabiles Kohlenstoffgerüst verbleibt, das die Festigkeit des erhaltenen Erzeugnisses bedingt.

Organische Bindemittel können alle flüssigen oder festen, oligomeren oder polymeren Verbindungen sein, die durch Vernetzungs- oder Kondensationsreaktionen in einen unschmelzbaren Zustand übergeführt werden können, wobei diese Härtungsreaktionen durch Einwirkungen von Wärme und/oder durch Reaktion mit einem Härtungsmittel bedingt sind. Beispiele für derartige Verbindungsklassen sind Phenolharze, Polyester, Epoxidharze auf Basis Bisphenol A oder Bishphenol F oder Furanharze. Als Phenolharze eignen sich alle Kondensationsprodukte aus ein- oder mehrwertigen Phenolen mit einem oder mehreren Aldehyden, wobei die Kondensationsreaktion im sauren oder im alkalischen Bereich durchgeführt worden sein kann. Desgleichen eignen sich Phenolharze, die mit Furan, Lignin, Harnstoff, Isocyanid, Melamin oder Epoxidverbindungen modifiziert sind.

Füllstoffe, die den mengenmäßig größten Anteil der härtbaren Formmassen darstellen, sind je nach Anwendungsgebiet mehr oder minder feinteilige Materialien wie z.B. Quarzsand, Magnesiumoxid, Dolomit, Ton, Schamotte, Kohlenstoff, Siliziumcarbid, Aluminiumoxid, Blähton, Perlit, Vermiculit, Schlacke oder Flugasche.

Neben den Füllstoffen werden je nach Polymer und Anwendungsgebiet noch weitere Zusatzstoffe in die Formmassen eingearbeitet, wie z.B. Trenn-, Gleit- oder Härtungsmittel, Härtungsbeschleuniger oder -Katalysator, Verzögerungs-, Netz- oder Stabilisierungsmittel, wie sie auch bei den entsprechenden bislang üblichen Mischungen eingesetzt werden. Die einzelnen Ingredientien werden in an sich bekannter Weise gemischt, so daß Formmassen entstehen, die entweder innerhalb einer vorgegebenen Verarbeitungszeit geformt und dann ausgehärtet werden oder die bei Raumtemperatur lagerstabil sind und die nach der Formgebung durch Wärme oder Kontakt mit einem Reaktionsgas (z.B. gemäß DE-PS 22 39 835 oder DE-A 31 00 157) gehärtet werden.

Als erfindungsgemäß zugesetzte Bor-Sauerstoffverbindungen können sowohl anorganische als auch organische Borverbindungen verwendet werden. Beispiele für anorganische Bor-Sauerstoffverbindungen sind Bortrioxid, Metaborsäure, Orthoborsäure sowie deren Salze und Addukte wie z.B. Ammoniumborat, Glycerinborsäure oder Hexamethylentetraminborat. Als organische Borverbindungen wirken im erfindungsgemäßen Sinn sowohl die aliphatischen als auch die aromatischen Borsäureester, Boron-, Borinsäuren oder Boroxine sowie auch die Anhydride der Borinsäuren, aber auch Phenol-Aldehyd-Kondensationsprodukte, bei denen die Kondensationsreaktion in Gegenwart von Borsäure oder einem Borat durchgeführt wurde (z.B. gemäß DE-AS 1 149 167) und bei denen Bor in das Polymergerüst eingebaut ist.

Die Borverbindungen werden in einer Menge von 2 bis 20 Gew.-%, bezogen auf die fertige Formmasse, eingesetzt. Weitere Änderungen in der Zusammensetzung der Massen im Vergleich zu den bislang üblichen Massen sind meist nicht notwendig. Gleichwohl kann es angebracht sein, bei Einsatz von Borsäure in phenolharz- oder epoxidharzhaltign Massen, deren härtende Wirkung zu berücksichtigen und die restlichen Härtermengen zu reduzieren.

Die Erfindung wird durch die folgenden Beispiele näher erläutert:

Beispiel 1:
20 g eines handelsüblichen Phenol-Novolak-Harzes (molares Phenol/Formaldehydverhältnis 1 : 0,84) mit einem Schmelzpunkt von 100°C werden mit 4 g Borsäure und 2 g Hexamethylentetramin feinst vermahlen. Die Mischung wird mit Sand im Verhältnis 1:5 innig gemischt und 2 h bei 150°C ausgehärtet. Das ausgehärtete Material wird zerkleinert und bei 750°C im Stickstoffstrom pyrolysiert. Die Pyrolysate werden gaschromatographisch untersucht. Es handelt sich im wesentlichen um Phenole, Ammoniak, Methan, Kohlenmonoxid und Kohlendioxid. Flüchtige aromatische Kohlenwasserstoffe entstehen nicht.

**Beispiel 2:**

500 g eines handelsüblichen Phenol-Novolak-Harzes gemäß Beispiel 1 werden aufgeschmolzen und in die Schmelze bei 150°C 100 g Ammoniumpentaborat aufgeschlämmt in 100 g Wasser langsam eingetragen. Nach Homogenisierung wird das Wasser durch Vakuumdestillation entfernt und das Harz ausgetragen und gemahlen.

20 g des Harzes werden mit 2 g Hexamethylentetramin feinst vermahlen und das Pulverharz mit Sand im Verhältnis 1:5 versetzt.

Die Sand-Harz-Mischung wird 2 h bei 150°C gehärtet, zerkleinert und bei 750°C im Stickstoffstrom pyrolysiert. Die flüchtigen Anteile enthalten keine aromatischen Kohlenwasserstoffe.

**Beispiel 3:**

Analog Beispiel 1 mit 1 g Borsäure auf 20 g Novolak und 2 g Hexamethylentetramin. Bei der Pyrolyse bei 750°C entstehen ca. 0,3 mg flüchtige aromatische Kohlenwasserstoffe pro g Harz.

**Beispiel 4:**

Analog Beispiel 2 mit 20 g Ammoniumpentaborat pro 500 g Phenol-Novolak. Bei der Pyrolyse bei 750°C entstehen ca. 0,2 mg flüchtige aromatische Kohlenwasserstoffe pro g Harz.

**Beispiel 5:**

Analog Beispiel 1 mit einem handelsüblichen Phenol-Resol (molares Phenol/Formaldehydverhältnis 1 : 1,24) mit einem Schmelzpunkt von 80°C als Harz ohne Zugabe von Hexamethylentetramin. Bei der Pyrolyse bei 750°C entstehen keine flüchtigen aromatischen Kohlenwasserstoffe.

Beispiel 6:

Analog Beispiel 4 mit einem handelsüblichen Phenol-Resol gemäß Beispiel 5 als Festharz ohne Zugabe von Hexamethylentetramin.

Bei der Pyrolyse bei 750°C entstehen ca. 0,2 mg flüchtige aromatische Kohlenwasserstoffe je g Harzmischung.

Beispiel 7:

Bei der sauren Kondensation eines Phenol-Formaldehyd-Novolaks (Phenol/Formaldehydverhältnis 1 : 0,7) werden 10 Gew.-%, bezogen auf die Summe aus Phenol und Formaldehyd, Borsäuretriphenylester zugegeben. Nach dem Ausdestillieren des Wassers wird ein Harz mit einem Schmelzpunkt von 90°C erhalten.

20 g dieses Harzes werden mit 2 g Hexamethylentetramin und 80 g Sand gemischt und analog Beispiel 1 gehärtet und pyrolysiert. Dabei entstehen keine flüchtigen aromatischen Kohlenwasserstoffe.

Beispiel 8:

20 g einer Mischung aus Phenol-Novolak-Harz gemäß Beispiel 1 und Phenol-Resol gemäß Beispiel 5 im Verhältnis 60 : 40 werden mit 4 g Borsäure vermahlen. Die Mischung wird mit Sand im Verhältnis 1 : 5 vermischt und 2 h bei 150°C gehärtet. Bei der Pyrolyse analog Beispiel 1 entstehen keine flüchtigen aromatischen Kohlenwasserstoffe.

Beispiel 9:

30 g eines sauer kondensierten Furanharzes (Furfurylalkohol/Formaldehyd-Verhältnis 1 : 0,6) werden mit 10 g Furfurylalkohol verdünnt (Viskosität : 15 000 mPa's), mit 20 g Methyl-äthylketonperoxid, 50%ig in Phlegmatisierungsmittel und 4 g Borsäure versetzt und dieses Gemisch mit 1 kg Sand innig vermischt. Diese Masse wird durch Begasen mit Schwefeldioxid (2 sec) gehärtet und während 2 h bei 150° nachgetempert. Bei der Pyrolyse analog Beispiel 1 entstehen keine flüchtigen aromatischen Kohlenwasserstoffe.

Beispiel 10:

40 g einer Mischung aus 80 Gew.-% eines handelsüblichen Epoxidharzes auf Bisphenol-A-Basis (Epoxidäquivalent: 188) und 20 Gew.-% Trimethylolpropantriacrylat werden mit 10 g Cumolhydroperoxid und 4 g Borsäure versetzt und dieses Gemisch mit 1 kg Sand innig vermischt. Diese Masse wird analog zu Beispiel 9 gehärtet und pyrolysiert. Bei der Pyrolyse entstehen keine flüchtigen aromatischen Kohlenwasserstoffe.

Vergleichsbeispiel 1:

20 g des Phenol-Novolak-Harzes gemäß Beispiel 1 und 2 g Hexamethylentetramin werden mit Sand im Verhältnis 1:5 gemischt und 2 h bei 150°C ausgehärtet. Das ausgehärtete Material wird bei 750°C im $N_2$-Strom pyrolysiert und die flüchtigen Bestandteile analysiert. Neben Phenolen, Methan, Ammoniak und Kohlenmonoxid entstehen aromatische Kohlenwasserstoffe wie Benzol, Toluol, Xylol in einer Menge von 2 mg pro g Harz.

Vergleichsbeispiel 2:
Analog Vergleichsbeispiel 1 mit dem Phenol-Resol-Festharz gemäß Beispiel 5 als Harzkomponente.
Bei der Pyrolyse bei 750°C entstehen ca. 1,5 mg flüchtige aromatische Kohlenwasserstoffe je g Harz.

Vergleichsbeispiel 3:
Analog Beispiel 9 wird eine Furanharzmischung, jedoch ohne Borsäure, gehärtet und pyrolysiert.
Die Pyrolysegase enthalten 1,2 mg flüchtige aromatische Kohlenwasserstoffe je g Harz.

Vergleichbeispiel 4:
Analog Beispiel 10 wird eine Epoxidharzmischung, jedoch ohne Borsäure, gehärtet und pyrolysiert.
Die Pyrolysegase enthalten 1,4 mg flüchtige aromatische Kohlenwasserstoffe je g Harz.

RÜTGERSWERKE Aktiengesellschaft, 6000 Frankfurt/M. 11

EP -906-R

P a t e n t a n s p r ü c h e

1. Härtbare Formmassen aus organischen Bindemitteln und üblichen Füll- und Zusatzstoffen, bei denen das Bindemittel nach der Formgebung und dem Härtungsvorgang pyrolytisch zersetzt wird, d a d u r c h  g e k e n n z e i c h n e t, daß sie 2 bis 20 Gew.-%, bezogen auf die Bindemittelmenge, einer oder mehrerer Bor-Sauerstoffverbindungen enthalten.

2. Formmassen nach Anspruch 1, d a d u r c h  g e k e n n - z e i c h n e t, daß sie als Borverbindung Borsäure enthalten.

3. Formmassen nach Anspruch 1 und 2, d a d u r c h  g e - k e n n z e i c h n e t, daß sie als Borverbindung Borester enthalten.

0156043

4. Formmassen nach Anspruch 1, d a d u r c h   g e -
k e n n z e i c h n e t, daß das Bindemitel ein Phenol-
Aldehyd-Kondensationsprodukt ist.

5. Formmassen nach  Anspruch 1, d a d u r c h   g e -
k e n n z e i c h n e t, daß das Bindemittel ein in
Gegenwart von Bor-Sauerstoff-Verbindungen kondensiertes
Phenol-Aldehyd-Kondensationsprodukt ist.

6. Formmassen nach Anspruch 1, d a d u r c h   g e -
k e n n z e i c h n e  , daß das Bindemittel ein Epoxidharz ist.

7. Verwendung von Formmassen nach den Ansprüchen 1 - 6
zur Herstellung von Kernen und Formen in der Gießereiindustrie.

8. Verwendung von Formmassen nach den Ansprüchen 1 - 6
zur Herstellung von feuerfesten Erzeugnissen.

9. Verwendung von Formmassen nach den Ansprüchen 1 - 6
zur Herstellung von Kohlenstoff-Werkstoffen.